# EUROPÄISCHE PATENTSCHRIFT

(11) **EP 1 979 706 B1**
(45) Veröffentlichungstag und Bekanntmachung des Hinweises auf die Patenterteilung: **05.08.2009**
(21) Anmeldenummer: 06830577.0
(22) Anmeldetag: 13.12.2006
(51) Int. Cl.: G01B 11/02, G01B 11/14, F01D 5/18, G01S 17/02

(54) **MESSVORRICHTUNG**
MEASURING APPARATUS
DISPOSITIF DE MESURE

(30) Priorität: 02.02.2006 CH 169062006
(43) Veröffentlichungstag der Anmeldung: 15.10.2008
(73) Patentinhaber: Alstom Technology Ltd, 5400 Baden (CH)
(72) Erfinder: FRANITZA, Karsten, CH-5400 Baden (CH); FEHRMANN, Bernd, CH-5415 Nussbaumen (CH); HOEBEL, Matthias, CH-5210 Windisch (CH); LANG, Peter, CH-5085 Sulz (CH)
(86) Internationale Anmeldenummer: PCT/EP2006/069642
(87) Internationale Veröffentlichungsnummer: WO 2007/087931

(56) Entgegenhaltungen:
- EP-A- 1 605 230
- US-A- 5 936 736
- US-A1- 2003 048 355
- US-A1- 2005 077 470
- US-B1- 6 667 458

## Beschreibung

### Technisches Gebiet

Die vorliegende Erfindung betrifft eine Messvorrichtung zur berührungsfreien Erfassung eines Abstands zwischen einer Oberfläche eines Messobjektes und der Messvorrichtung sowie zur simultanen berührungsfreien, visuellen Erfassung der Oberfläche.

### Stand der Technik

Beim Betrieb einer Gasturbine sind die am stärksten belasteten Gasturbinenschaufeln der ersten Stufe Heißgastemperaturen von über 1400° C ausgesetzt. Zum Schutz derselben werden diese deshalb mit metallischen Oxidationsschutzschichten und häufig zusätzlich mit keramischen Wärmdämmschichten (TBC) versehen. Mit diesen Schutzschichten kann auch unter extremen Einsatzbedingungen eine sicherer Betrieb der Turbinen über typische Intervalle gewährleistet werden. Nach diesen Intervallen sind allerdings vor allem die Oxidationsschutzschichten verbraucht und bieten keinen ausreichenden Schutz mehr, so dass die Turbinenschaufel ausgebaut und ersetzt werden muss. Aufgrund des hohen Wertes einen derartigen Turbinenschaufel ist eine Reparatur und eine damit ein Recycling der Komponenten von großem kommerziellen Interesse. Die Schutzschichten können dabei erneuert werden, indem zunächst die verbrauchten Schichten durch einen chemischen Prozess entfernt und die Turbinenschaufeln im Anschluss daran neu beschichtet werden. Wie bei der Erstfertigung kommen dabei meist Plasma-Spritzverfahren zur Anwendung. Beim Rekonditionieren muss jedoch sicher gestellt sein, dass die ursprünglichen Eigenschaften der Turbinenschaufeln erhalten bleiben, wobei das interne Kühlsystem der Turbinenschaufel, insbesondere gebildet durch ein komplexes Netzwerk von miteinander verknüpften Bohrungen und Kühlkanälen, eine Schlüsselrolle spielt. Die Wiederherstellung dieses Kühlsystems ist, für die durch Heißgaseinwirkung stark belasteten Turbinenschaufeln, unabdingbar, um die Turbinenschaufeln für ein weiteres Betriebsintervall freigeben zu können. Bei der Wiederbeschichtung von gebrauchten Turbinenschaufeln tritt jedoch das Problem auf, dass durch die erneute Beschichtung mit der metallischen Oxidationsschutzschicht bzw. mit der keramischen Wärmedämmschicht, die ursprünglich offenen Kühlluftbohrungen verstopft werden, wodurch sich die Kühlung der Turbinenschaufeln drastisch verschlechtert und den Betriebsanforderungen nicht mehr genügt. Aus diesem Grund ist ein spezieller Bearbeitungsprozess zum Wiederöffnen solcher verstopfter Kühlkanäle erforderlich.

Für den Rekonditionierungsprozess zum Öffnen der beim Neubeschichten verschlossenen Kühlluftbohrungen ist die Erfassung von Kühllochpositionen und -orientierungen erforderlich. Generell ergeben sich dabei insbesondere bei konisch auslaufenden Kühlluftbohrungen Vertiefungen, welche mittels eines Abstandsmessgeräts erfasst werden können.

Aus der US 6,667,458 B1 sind ein System sowie ein Verfahren zur Bestimmung eines spezifischen Abstands zwischen einem Lasersystem und einer Oberfläche eines Werkstücks bekannt. Das System umfasst eine Optikvorrichtung zur Fokussierung des Laserstrahls auf der Oberfläche des Werkstücks sowie eine Spiegeleinrichtung, welche vom Werkstück reflektierte Strahlung zu einem Abstandsmessgerät umlenkt. Das Abstandsmessgerät kann beispielsweise ein Conoskop sein. Das Abstandsmessgerät ist mit einer Steuereinrichtung verbunden, welches zur Positionierung des Werkstückes, d.h. zur Veränderung eines Abstandes zwischen dem Messsystem und des Werkstücks ausgebildet ist. Das bekannte System erfasst dabei lediglich einen Abstand zwischen der Oberfläche des Werkstücks und dem Messsystem.

Daneben sind aus US 5936736 A, US 2003/0048355 A1 und EP 1606230A1 Messvorrichtungen mit den Merkmalen des Oberbegriffs des unabhängigen Anspruchs bekannt.

### Darstellung der Erfindung

Es ist Aufgabe der vorliegenden Erfindung, eine Messvorrichtung bereitzustellen, mit welcher unter nahezu schattenfreier Beleuchtung des Arbeitspuktes ein besonders zuverlässiges Detektieren und Erfassen von Kühlluftbohrungen bei Turbinenschaufeln möglich ist und dadurch eine zuverlässige Kühlung der Turbinenschaufeln nach einem Erneuern einer Wärmeschutzbeschichtung gewährleistet werden kann.

Dieses Problem wird durch den unabhängigen Anspruch gelöst. Bevorzugte Ausführungsformen sind in den abhängigen Ansprüchen gezeigt.

Die Erfindung beruht auf dem allgemeinen Gedanken, an einer Messvorrichtung einen eine Abstandsmesseinrichtung, eine Kameravorrichtung und eine Beleuchtungseinrichtung tragenden Messkopf vorzusehen, welcher zur berührungsfreien Erfassung eines Abstands zwischen einer Oberfläche des Messobjekts und der Messvorrichtung ausgebildet ist und gleichzeitig ebenfalls berührungsfrei die Oberfläche des Messobjektes visuell erfasst. Besonderes Augenmerk liegt hierbei auf einer kompakten Bauweise, möglichst großem Arbeitsabstand zum Messobjekt, einer für die Anwendung optimierten Auflösung/Vergrößerung sowie einer lichtstarken, vorzugsweise koaxialen Beleuchtung. Dabei wird der Arbeitspunkt auf der Oberfläche des Messobjektes von der Beleuchtungseinrichtung nahezu schattenfrei beleuchtet und gleichzeitig von der Kameravorrichtung aufgezeichnet bzw. von der Abstandsmesseinrichtung fokussiert bzw. vermessen. Für diese nahezu schattenfreie Beleuchtung weist die Beleuchtungseinrichtung zumindest drei auf einer Ringkontur bezüglich der optischen Achse angeordnete Punktlichtquellen auf, die unter einem Winkel von <15° zur optischen Achse ausgerichtet sind. Um die möglichst kompakte Bauweise erreichen zu können, ist in einer optischen Achse zwischen der Beleuchtungseinrichtung und einem Arbeitspunkt auf der Oberfläche des Messobjekts eine Spiegel- und Filtereinrichtung gelegen, die wenigstens einen dichroitischen Spiegel aufweist, der Lichtstrahlen abhängig von deren Wellenlänge durchlässt oder reflektiert und dadurch vom Arbeitspunkt reflektiertes Licht auf die Abstandsmesseinrichtung und die Kameravorrichtung aufteilt. Der gemeinsame Arbeitspunkt erleichtert die Kalibrierung des Messkopfes auf einer Messmaschine, wie z.B. einem Roboter. Mit der erfindungsgemäßen Messvorrichtung, welche mit einem einzigen Arbeitspunkt für Bilderfassung und Abstandsmessung arbeitet, können im Vergleich zu individuellen Arbeitspunkten Maschinenbewegungen und damit Messzeit und Positionsfehler verringert werden.

Durch die erfindungsgemäße Spiegel- und Filtereinrichtung, welche mit Hilfe des dichroitischen Spiegels die reflektierten Lichtstrahlen abhängig von ihrer Wellenlänge auf die Abstandsmesseinrichtung und die Kameravorrichtung aufteilt, ist es möglich, sowohl den Abstand zur Oberfläche als auch ein visuelles Bild derselben aufzunehmen und dies mit einem sehr kompakten Messkopf, welcher aufgrund seines geringen Bauraumbedarfs besonders geeignet ist für die Arbeit an schwer zugänglichen Stellen.

Zweckmäßig ist eine Positioniereinrichtung vorgesehen, mit der die Kameravorrichtung und/oder die Abstandsmesseinrichtung und/oder die Beleuchtungseinrichtung relativ zueinander justiert werden können. Hierdurch lassen sich Fertigungstoleranzen im Aufbau der Messvorrichtung einfach ausgleichen sowie ein Feinabgleich der individuellen Arbeitspunkte von der Abstandsmesseinrichtung und der Kameravorrichtung durchführen. Vorzugsweise ist hierzu die Kameravorrichtung und/oder die Abstandsmesseinrichtung und/oder die Beleuchtungseinrichtung mit Hilfe der Positioniereinrichtung in den drei Raumachsen verschiebbar und arretierbar. Alternativ ist es denkbar, dass beispielsweise eine der vorgenannten Einrichtungen in zwei Richtungen verschiebbar ist und eine Justierung der verbleibenden dritten Raumachse durch ein Verstellen der Spiegel- und Filtereinrichtung erfolgt.

Zweckmäßig sind die Kameravorrichtung und die Abstandsmesseinrichtung parallel zueinander im oder am Messkopf angeordnet. Die parallele Anordnung erlaubt eine besonders kompakte Bauweise, wodurch ein Bauraumbedarf für den Messkopf erheblich reduziert und dadurch ein Handling desselben verbessert wird.

Bei einer weiteren vorteilhaften Ausführungsform der erfindungsgemäßen Lösung weist die Beleuchtungseinrichtung zumindest eine LED, insbesondere eine blaue LED, und/oder Halogen- und/oder eine Xenon-Lichtquelle auf, welche vorzugsweise blaues Licht aussendet. Insbesondere blaues Licht hat im Vergleich zu weißem oder andersfarbigem Licht den Vorteil, dass es die Abstandsmesseinrichtung, welche vorzugsweise mit einem roten Laserstrahl arbeitet, wenig beeinflusst. Im weißem Licht ist beispielsweise ebenfalls das rote Spektrum enthalten, was sich nachteilig auf die Signalqualität der Abstandsmesseinrichtung auswirken kann. Auch sind bei blauem Licht optimale Kontraste für die Bilderfassung erreichbar, da das vorzugsweise rote Laserlicht der Abstandmesseinrichtung das blaue Licht für die Kameravorrichtung nicht beeinflusst. Insbesondere ergeben sich hieraus Vorteile hinsichtlich der Umlenkung des rotes Lichtes mit der dichroitischen Spiegel- und Filtereinrichtung, was so mit anders farbigem Licht nicht erreichbar wäre.

Bei einer weiteren vorteilhaften Ausführungsform der Erfindung weist die Kameravorrichtung ein telezentrisches Zoomobjektiv und/oder einen Fernmikroskop-Aufsatz auf und arbeitet vorzugsweise mit einem digitalen Bildspeicher. Ein telezentrisches Zoomobjektiv bietet den Vorteil einer hohen Auflösung und damit verbunden einer hohen Bildqualität der aufgenommenen Oberfläche sowie eine leichte und präzise Einstellbarkeit. Ein Fernmikroskop-Aufsatz erlaubt eine genaue Detailaufnahme der betrachteten Oberfläche, wodurch sich die Kühlluftbohrungen besser lokalisieren lassen und dadurch aufgrund der deutlich verbesserten Erhebungsdaten ein anschließendes nachträgliches Öffnen der Kühlluftbohrungen mit höherer Genauigkeit möglich ist. Dabei können das Zoomobjektiv und/oder der Fernmikroskop-Aufsatz vorzugsweise motorgetrieben sein. Der digitale Bildspeicher bietet den Vorteil, dass die Bilddaten beispielsweise über ein Netzwerk an eine nachfolgende Maschine übermittelt werden können, welche das Öffnen der besichteten Kühlluftbohrungen bewerkstelligt. Gleichzeitig ist eine derartige digitale Bilderfassung Grundlage für eine hohe Bildqualität bei gleichzeitig geringen Bilderfassungskosten, da eine Speicherung auf herkömmlichen Bildträgern, wie beispielsweise Filmen, entfallen kann. Ebenso entfallen kann auch ein nachträgliches Bearbeiten der Filme, da die digitale Bilderfassung vorzugsweise ein direktes Einbinden der Bilddateien in den weiteren Bearbeitungsprozess erlaubt.

Weitere wichtige Merkmale und Vorteile der erfindungsgemäßen Messvorrichtung ergeben sich aus den abhängigen Ansprüchen, aus den Zeichnungen und aus den zugehörigen Figurenbeschreibungen.

### Kurze Beschreibung der Zeichnungen

Bevorzugte Ausführungsformen der Erfindung werden in den Zeichnungen dargestellt und werden in der folgenden Beschreibung näher erläutert. Auf Merkmale, die im wesentlichen oder funktionell gleich oder ähnlich sind, wird mit dem (den) gleichen Bezugszeichen Bezug genommen.

### Dabei zeigen, jeweils schematisch

- Fig. 1: eine erfindungsgemäße Messvorrichtung mit parallel zueinander angeordneter Kameravorrichtung und Abstandsmesseinrichtung,
- Fig. 2: eine Darstellung wie in Fig. 1, jedoch mit orthogonal zueinander angeordneter Kameravorrichtung und Abstandsmesseinrichtung,
- Fig. 3: eine Darstellung wie in Fig. 1, jedoch mit in der optischen Achse liegenden Kameravorrichtung,
- Fig. 4: eine Darstellung wie in Fig. 2, jedoch mit in der optischen Achse liegenden Kameravorrichtung,
- Fig. 5: eine Darstellung wie in Fig. 1, jedoch mit einer Positioniereinrichtung für die Kameravorrichtung,
- Fig. 6: eine Darstellung wie in Fig. 5, jedoch bei einer anderen Ausführungsform,
- Fig. 7: eine Darstellung wie in Fig. 3, jedoch mit einer Positioniereinrichtung für eine Spiegel- und Filtereinrichtung,
- Fig. 8: eine Darstellung wie in Fig. 7, jedoch bei einer anderen Ausführungsform.

### Wege zur Ausführung der Erfindung

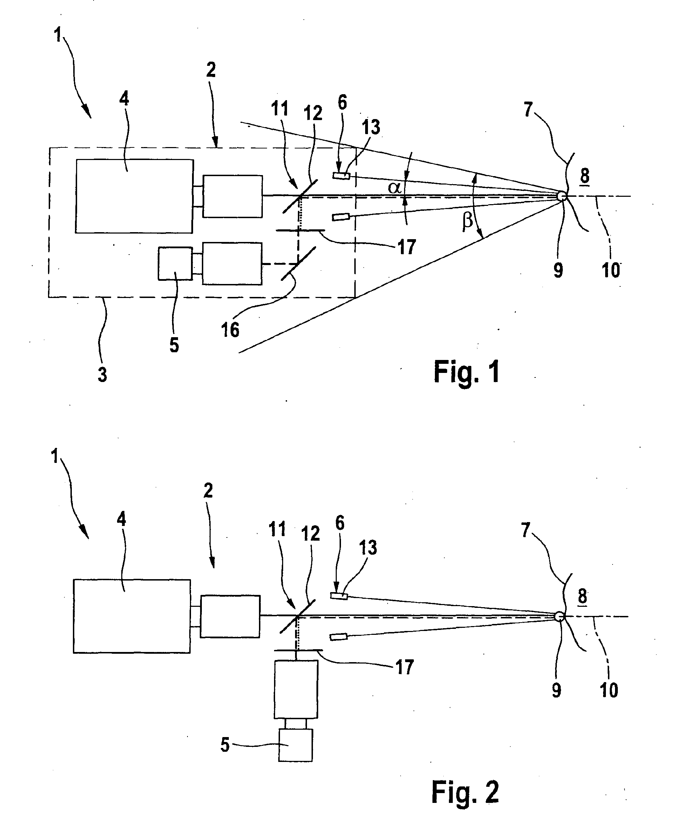

Entsprechend Fig. 1 weist eine Messvorrichtung 1 einen Messkopf 2 auf, welcher in einem Gehäuse 3 angeordnet ist und eine Abstandsmesseinrichtung 4, eine Kameravorrichtung 5 und eine Beleuchtungseinrichtung 6 trägt. Die Messvorrichtung 1 ist zur berührungsfreien Erfassung eines Abstands zwischen einer Oberfläche 7 eines Messobjektes 8 und der Messvorrichtung 1 sowie zu simultanen berührungsfreien, visuellen Erfassung der Oberfläche 7 ausgebildet. Dabei beleuchtet die Beleuchtungseinrichtung 6 einen Arbeitspunkt 9 auf der Oberfläche 7 des Messobjektes 8, der gleichzeitig von der Kameravorrichtung 5 und der Abstandsmesseinrichtung 4 fokussiert wird. Erfindungsgemäß ist darüber hinaus in einer optischen Achse 10 eine Spiegel- und Filtereinrichtung 11 vorgesehen, welche wenigstens einen dichroitischen Spiegel 12 aufweist, der Lichtstrahlen abhängig von deren Wellenlänge durchlässt oder reflektiert und dadurch vom Arbeitspunkt 9 reflektiertes Licht auf die Abstandsmesseinrichtung 4 und die Kameravorrichtung 5 aufteilt. Dabei kann der dichroitische Spiegel so ausgestaltet sein, dass seine Transparenz für die Wellenlänge der optischen Messvorrichtung 4 größer als 70% beträgt, während er andere Wellenlängen zu über 90% reflektiert. Bei einem anderen Aufbau der Messvorrichtung 1 ist aber auch denkbar, dass die Transparenz des Spiegels 12 für die Wellenlänge der optischen Messvorrichtung 4 größer als 70% beträgt, während er für andere Wellenlängen zu über 90% transparent ist. Ein Arbeitsabstand zwischen dem Arbeitspunkt 9 und der Messvorrichtung 1 ist dabei vorzugsweise größer als 70mm. Ein möglichst großer Arbeitsabstand ist besonders günstig für die Ausführung des Messvorgangs.

Die Beleuchtungseinrichtung 6 weist gemäß Fig. 1 zumindest eine farbige, insbesondere blaue LED und/oder eine Halogen- und/oder Xenon-Lichtquelle 13 auf, welche vorzugsweise blaues Licht aussendet. Um eine möglichst koaxial zur optischen Achse 10 ausgerichtete Beleuchtung des Arbeitspunktes 9 zu erhalten, weist die Beleuchtungseinrichtung 6 zumindest drei auf einer Ringkontur bezüglich der optischen Achse 10 angeordnete Punktlichtquellen 13 auf beispielsweise die LED's 13, die unter einem Winkel α < 15° zur optischen Achse 10 ausgerichtet sind. Denkbar ist auch, dass die Beleuchtungseinrichtung 6 eine nicht gezeigte Faseroptikvorrichtung aufweist, mit welcher über lichtleitende Fasern, beispielsweise Glasfasern, Licht möglichst koaxial zur optischen Achse 10 in Richtung des Arbeitspunktes 9 auf die Oberfläche 7 des Messobjekts 8 ausgesandt wird.

Die Abstandsmesseinrichtung 4 kann beispielsweise als optischer Abstandsensor ausgebildet sein und mit einem Laser arbeiten, der vorzugsweise einen roten Laserstrahl erzeugt. Im Unterschied zu dem blauen Licht, das die Beleuchtungseinrichtung 6 aussendet, weist somit das von der Abstandsmesseinrichtung 4 ausgesandte Licht eine andere Wellenlänge auf, wobei der dichroitische Spiegel 12 wie eingangs erwähnt so ausgebildet ist, dass er das für die Abstandsmessung von der Abstandsmesseinrichtung 4 benötigte Licht durchlässt, während er Licht anderer Wellenlänge, insbesondere blaues, von der Beleuchtungseinrichtung 6 ausgesandtes Licht, umlenkt und der Kameravorrichtung 5 zuleitet.

Das Messprinzip der optischen Abstandsmessung beruht auf einem Aussenden von kohärentem Licht, beispielsweise Laserstrahlen, und Analyse der Rückreflexion von der Oberfläche 7, deren Abstand ermittelt werden soll. Die Strahlung der Abstandsmesseinrichtung 4 darf folglich von einem optischen Filter nur geringfügig beeinflusst werden, um brauchbare Messdaten zu erhalten. Das wird erreicht, in dem vor der Abstandsmesseinrichtung 4 der dichroitische Spiegel 12 angeordnet wird, der für die Wellenlänge der Abstandsmesseinrichtung 4 transparent erscheint und die anderen Wellenlängen des sichtbaren Lichtes reflektiert. Die reflektierten Bildinformationen werden dann von der Kameravorrichtung 5 aufgefangen. Dabei kann die Kameravorrichtung 5 entweder rechtwinklig zur Abstandsmesseinrichtung 4 angeordnet werden oder parallel dazu, wenn der Strahlengang mit einem Spiegel 16 nochmals umgelenkt wird. Die parallele Anordnung der Abstandsmesseinrichtung 4 und der Kameravorrichtung 5 führt zu einer schlanken und kompakten Bauweise, wie sie insbesondere zur Vermessung von Turbinenleitschaufeln besonders günstig erscheint. Darüber hinaus ist auch ein möglichst kleiner Öffnungswinkel β anzustreben.

Die Spiegel- und Filtereinrichtung 11 und insbesondere der dichroitische Spiegel 12 lassen einen Anteil von mehr als 70%, insbesondere einen Anteil von mehr als 95%, der von der Oberfläche 7 des Messobjektes 8 reflektierten Strahlung der optischen Abstandmesseinrichtung 4 unbeeinflusst, wobei jedoch trotzdem ein Bruchteil der reflektierten Strahlung an dem dichroitischen Spiegel 12 reflektiert wird und als störender Reflex auf einem Bild der Kameravorrichtung 5 erscheint. Aus diesem Grund ist erfindungsgemäß im Strahlengang der Bilderfassung eine weitere Möglichkeit zur Filterung der unerwünschten Reflexionen der Abstandsmesseinrichtung 4 gegeben. Eine derartige Filterung ist gemäß Fig. 1 als Filter 17 ausgebildet und zwischen dem dichroitischen Spiegel 12 und dem Spiegel 16 angeordnet.

Um eine möglichst hohe Bildqualität zu erhalten, kann die Kameravorrichtung 5 beispielsweise ein telezentrisches Zoomobjektiv und/oder einen Fernmikroskop-Aufsatz aufweisen. Diese beiden Komponenten erlauben eine hohe Auflösung des aufgezeichneten Bildes und dadurch eine exakte Bestimmung einer Lage von auf der Oberfläche 7 befindlichen Kühlbohrungsöffnungen. Darüber hinaus weist die Kameravorrichtung 5 einen digitalen Bildspeicher auf, der sowohl eine Speicherung der erfassten Bilddaten erlaubt als auch deren Weiterleitung an mit dem Öffnungsprozess der Kühlluftöffnungen befassten Maschinen. Durch die digitale Erfassung der Oberfläche 7 des Messobjektes 8 ist ein problemloses Weiterverarbeiten bzw. Weiterleiten dieser Daten möglich, ohne dass diese vorher aufwändig umgewandelt, beispielsweise gescannt, werden müssen.

Um den Messkopf 2 besser steuern zu können, kann dieser mit einem Roboter, einem Computer oder einem Koordinatenmessgerät kommunizierend verbunden sein, so dass eine Erfassung der Kühlluftöffnungen auf der Oberfläche 7 des Messobjektes 8 vorzugsweise nahezu voll automatisch erfolgen kann. Denkbar ist darüber hinaus, dass die Beleuchtungseinrichtung 6 und/oder die Abstandsmesseinrichtung 4 und/oder die Kameravorrichtung 5 computergesteuert sind.

Gemäß Fig. 2 ist eine Messvorrichtung 1 dargestellt, welche sich lediglich dadurch von der in Fig. 1 unterscheidet, dass die Kameravorrichtung 5 orthogonal zur Abstandsmesseinrichtung 4 angeordnet ist. Der dichroitische Spiegel 12, reflektiert das für die Kameravorrichtung 5 erforderliche Licht und leitet dieses durch das Filter 17 der Kameravorrichtung 5 zu. Die Beleuchtungseinrichtung 6 weist ebenso wie in Fig. 1 ringförmig um die optische Achse 10 angeordnete Punktlichtquellen 13, beispielsweise LED's, auf. Das für die Abstandsmesseinrichtung 4 erforderliche Signal durchdringt den dichroitischen Spiegel 12 und gelangt direkt entlang der optischen Achse 10 zur Abstandsmesseinrichtung 4.

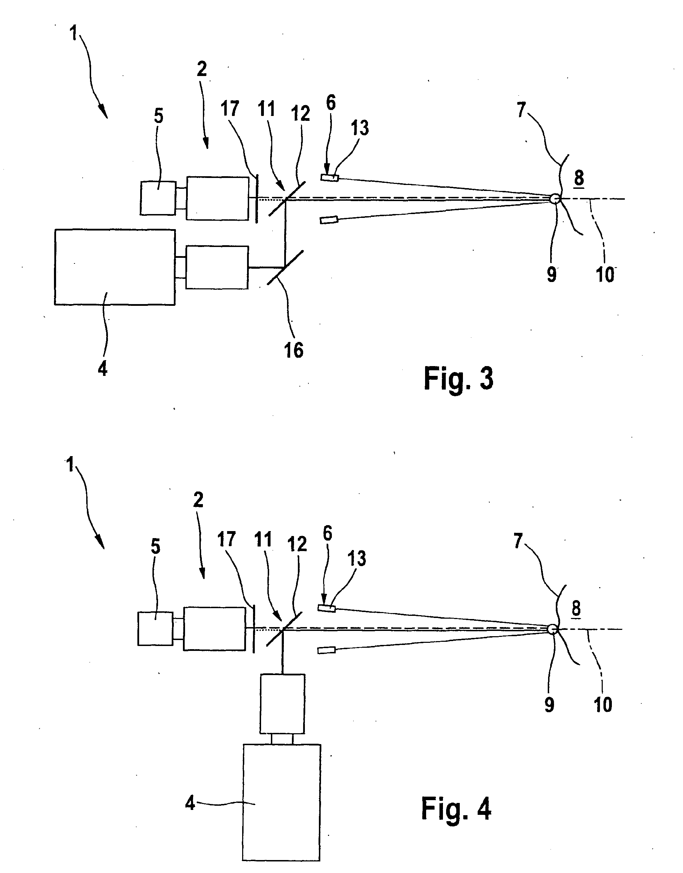

In Fig. 3 ist die Kameravorrichtung 5 im wesentlichen in der optischen Achse 10 angeordnet, während die Abstandsmesseinrichtung 4 parallel dazu angeordnet ist. Dies ist im Prinzip die gleiche Darstellung wie in Fig. 1, jedoch mit bezüglich ihrer Positionen vertauschten Abstandsmesseinrichtung 4 und Kameravorrichtung 5. Der dichroitische Spiegel 12 ist gemäß Fig. 3 so ausgebildet, dass er das für die Abstandsmesseinrichtung 4 erforderliche Licht reflektiert und dem Spiegel 16 zulenkt, welcher das ihm zugelenkte Licht vorzugsweise zu 100% reflektiert und an die Abstandsmesseinrichtung 4 weiterleitet. Zwischen dem dichroitischen Spiegel 12 und der Kameravorrichtung 5 ist gemäß Fig. 3 in der optischen Achse 10 der Filter 17 angeordnet, welche eine Reduktion ungewollter Rückreflexion der Abstandsmesseinrichtung 4 bewirkt.

In Fig. 4 ist die Kameravorrichtung 5 wie in Fig. 3 angeordnet, die Abstandsmesseinrichtung 4 ist im Unterschied dazu jedoch orthogonal zur optischen Achse 10 angeordnet, so dass der Spiegel 16 entfallen kann. Sowohl in Fig. 3 als auch in Fig. 4 wird die Beleuchtungseinrichtung 6 durch ringförmig um die optische Achse 10 angeordnete Punktlichtquellen 13, beispielsweise LEDs oder Xenon-Lichtquellen, gebildet. Diese Punktlichtquellen 13 erzeugen einen Lichtstrahl, der vorzugsweise eine nahezu schattenfreie Beleuchtung des Arbeitspunktes 9 erlaubt.

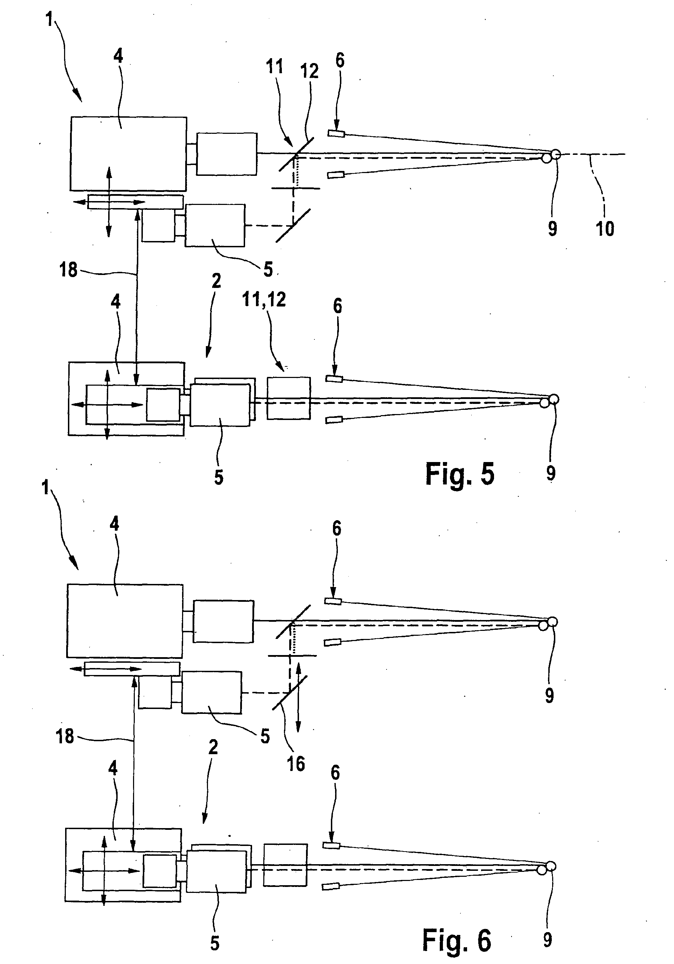

In Fig. 5 ist eine Positioniereinrichtung 18 eingezeichnet, mit der die Kameravorrichtung 5 bezüglich der Abstandsmesseinrichtung 4 und/oder zur Beleuchtungseinrichtung 6 justiert werden kann. Die Positioniereinrichtung 18 erlaubt den Ausgleich von Fertigungstoleranzen sowie einen Feinabgleich der individuellen Arbeitspunkte von der Abstandsmesseinrichtung 4 und der Kameravorrichtung 5. Dazu kann gemäß Fig. 5 die Kameravorrichtung 5 in den drei Raumachsen verschoben und arretiert werden. Alternativ hierzu ist auch denkbar, die Kameravorrichtung 5 in zwei Richtungen verschiebbar zu lagern und eine Justierung der verbleibenden Richtung durch eine Verschiebung des Umlenkspiegels 16, wie in Fig. 6 gezeigt, vorzunehmen.

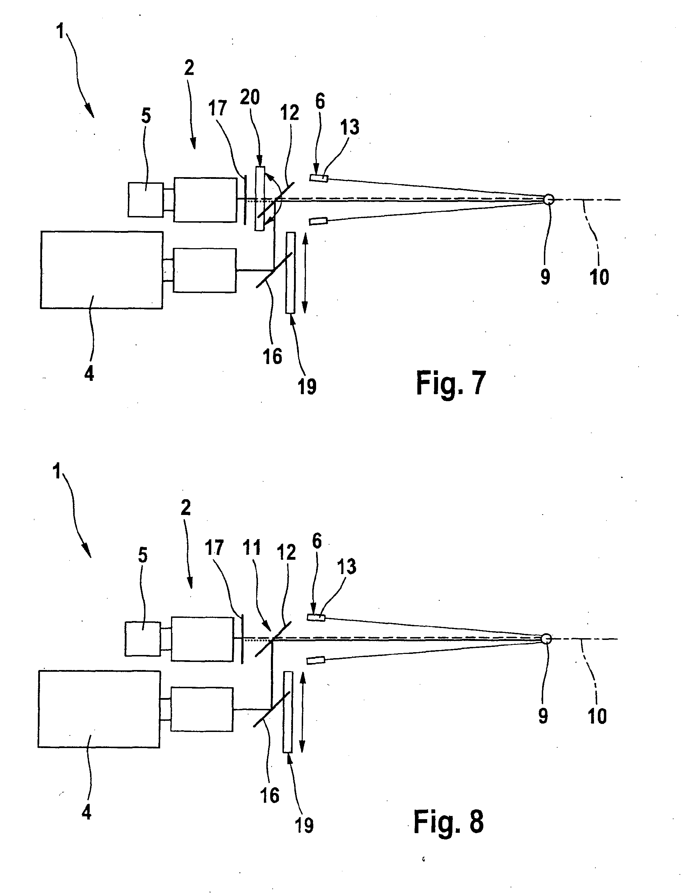

Gemäß den Fig. 7 und 8 kann auch eine vorzugsweise translatorisch und rotatorisch arbeitende Spiegelsteuerungseinrichtung 19 oder eine vorzugsweise nur rotatorisch arbeitende Spiegelsteuerungseinrichtung 20 vorgesehen sein, wobei mit zwei derartigen Spiegelsteuerungen 19, 20 gemäß Fig. 7 und einer Abstandsmesseinrichtung 4, welche die Abstandsinformationen punktförmig erfasst, eine dreidimensionale Erfassung der Abstandsinformation ermöglicht werden. In Fig. 8 ist lediglich eine Spiegelsteuerungseinrichtung 19 vorgesehen, wobei hier eine dreidimensionale Ermittlung der Abstandsinformationen dadurch ermöglicht wird, dass die Abstandsmesseinrichtung 4 die Fähigkeit besitzt, auch Abstandsinformationen auf einer senkrecht zur Zeichnungsebene verlaufenden Linie zu erfassen.

Denkbar ist auch die Verwendung einer nicht dargestellten Beleuchtungseinrichtung 6, bei dem jede Punktlichtquelle 13 eine individuelle Fokussierlinse zur Abbildung in den Arbeitspunkt 9 hat bzw. eine gemeinsame Optik für alle Punktlichtquellen 13 verwendet wird, welche die Kameravorrichtung 5 nicht beeinflusst. Vorzugsweise werden hierbei Punktlichtquellen 13 mit einer Lichtstärke von größer als 2000 mcd oder einem Lichtstrom von größer als 5 Im verwendet.

### Bezugszeichenliste

- 1: Messvorrichtung
- 2: Messkopf
- 3: Gehäuse
- 4: Abstandsmesseinrichtung
- 5: Kameravorrichtung
- 6: Beleuchtungseinrichtung
- 7: Oberfläche des Messobjekts 8
- 8: Messobjekt
- 9: Arbeitspunkt
- 10: optische Achse
- 11: Spiegel-Filtereinrichtung
- 12: dichroitischer Spiegel
- 13: Punktlichtquellen/LED/Hallogen/Xenon
- 16: Spiegel
- 17: Filter
- 18: Positioniereinrichtung
- 19: translatorische oder rotatorische Spiegelsteuerungseinrichtung
- 20: rotatorische Spiegelsteuerungseinrichtung

- α: Winkel der Punktlichtquellen zur optischen Achse

## Patentansprüche

1. Messvorrichtung (1) zur berührungsfreien Erfassung eines Abstandes zwischen einer Oberfläche (7) eines Messobjektes (8) und der Messvorrichtung (1) sowie zur simultanen berührungsfreien, visuellen Erfassung der Oberfläche (7),
- mit einem eine Abstandsmesseinrichtung (4), eine Kameravorrichtung (5) und eine Beleuchtungseinrichtung (6) tragenden Messkopf (2),
- wobei die Beleuchtungseinrichtung (6) einen Arbeitspunkt (9) auf der Oberfläche (7) des Messobjekts (8) beleuchtet, der gleichzeitig von der Kameravorrichtung (5) und der Abstandsmesseinrichtung (4) fokussiert wird,
- mit einer in einer optischen Achse (10) zwischen der Beleuchtungseinrichtung (6) und dem Arbeitspunkt (9) gelegenen Spiegel- und Filtereinrichtung (11), die wenigstens einen dichroitischen Spiegel (12) aufweist, welcher Lichtstrahlen abhängig von der Wellenlänge durchlässt oder reflektiert und **dadurch** vom Arbeitspunkt (9) reflektiertes Licht auf die Abstandsmesseinrichtung (4) und die Kameravorrichtung (5) aufteilt,
**dadurch gekennzeichnet,**
**dass** die Beleuchtungseinrichtung (6) zumindest drei auf einer Ringkontur bezüglich der optischen Achse (10) angeordnete Punktlichtquellen (13) aufweist, die unter einem Winkel (α) von < 15° zur optischen Achse (10) ausgerichtet sind.

2. Messvorrichtung nach Anspruch 1,
**dadurch gekennzeichnet,**
**dass** eine Positioniereinrichtung (18) vorgesehen ist, mit der die Kameravorrichtung (5) und/oder die Abstandsmesseinrichtung (4) und/oder die Beleuchtungseinrichtung (6) relativ zueinander justiert werden können.

3. Messvorrichtung nach Anspruch 1 oder 2,
**dadurch gekennzeichnet,**
**dass** die Kameravorrichtung (5) und die Abstandsmesseinrichtung (4) bezüglich der optischen Achse (10) parallel oder orthogonal zu einander im oder am Messkopf (2) angeordnet sind.

4. Messvorrichtung nach einem der Ansprüche 1 bis 3,
**dadurch gekennzeichnet,**
- **dass** die Beleuchtungseinrichtung (6) zumindest eine LED (13) und/oder eine Halogen- und/oder eine Xenon-Lichtquelle und/oder ein Stroboskop aufweist, und/oder
- **dass** spektrale Hauptbestandteile der Beleuchtungseinrichtung (6) eine zu den spektralen Hauptbestandteile der Abstandsmesseinrichtung (4) andere Wellenlänge aufweisen, und/oder
- **dass** die spektralen Hauptbestandteile der Beleuchtungseinrichtung (6) eine Wellenlänge von 400 - 520 nm aufweisen, und/oder
- **dass** die Beleuchtungseinrichtung (6) eine Faseroptikvorrichtung aufweist, und/oder
- **dass** eine Optikeinrichtung (14) vorgesehen ist, welche das von der Beleuchtungseinrichtung (6) ausgesandte Licht auf den Arbeitspunkt (9) fokussiert.

5. Messvorrichtung nach einem der Ansprüche 1 bis 4,
**dadurch gekennzeichnet,**
- **dass** die Abstandsmesseinrichtung (4) als optischer Abstandsserisor ausgebildet ist, und/oder
- **dass** die Abstandsmesseinrichtung (4) mit einem konoskopischen Sensor und/oder mit einem Laser arbeitet, und/oder
- **dass** der Laser mit einer definierten Wellenlänge arbeitet, und/oder
- **dass** das von der Abstandsmesseinrichtung (4) ausgesandte Licht eine andere Wellenlänge aufweist, als das von der Beleuchtungseinrichtung (6) ausgesandte Licht, und/oder
- **dass** unmittelbar vor der Kameravorrichtung (5) ein Filter (17) zur Reduktion ungewollter Rückreflexion der Abstandsmesseinrichtung (4) angeordnet ist, und/oder
- **dass** ein Lichtstrahl der Beleuchtungseinrichtung (6) und ein Lichtstrahl der Abstandsmesseinrichtung (4) nahezu koaxial zueinander verlaufen.

6. Messvorrichtung nach einem der Ansprüche 1 bis 5,
**dadurch gekennzeichnet,**
- **dass** die Messvorrichtung (1) mit einem Roboter, einem Computer oder einem Koordinatenmessgerät kommunizierend verbunden ist, und/oder
- **dass** die Beleuchtungseinrichtung (6) und/oder die Abstandsmesseinrichtung (4) und/oder die Kameravorrichtung (5) computergesteuert sind.

7. Messvorrichtung nach einem der Ansprüche 1 bis 6,
**dadurch gekennzeichnet,**
- **dass** die Kameravorrichtung (5) ein telezentrisches Zoomobjektiv aufweist, und/oder
- **dass** das Zoomobjektiv eine Antriebseinheit aufweist,
- **dass** die Kameravorrichtung (5) einen Fernmikroskop-Aufsatz aufweist, und/oder
- **dass** die Kameravorrichtung (5) einen digitalen Bildspeicher aufweist, und/oder
- **dass** die Kameravorrichtung (5) mit einem Abbildungsverhältnis zwischen 1:5 und 5:1 arbeitet.

8. Messvorrichtung nach einem der Ansprüche 1 bis 7,
**dadurch gekennzeichnet,**
**dass** ein Arbeitsabstand zwischen dem Arbeitspunkt (9) und der Messvorrichtung (1) größer als 70 mm ist.

## Claims

1. Measuring apparatus (1) for contactless detection of a distance between a surface (7) of a measurement object (8) and the measuring apparatus (1), and for simultaneous contactless visual detection of the surface (7),
- having a measuring head (2) holding a distance measuring device (4), a camera apparatus (5) and an illumination device (6),
- the illumination device (6) illuminating an operating point (9) on the surface (7) of the measurement object (8) that is simultaneously focused by the camera apparatus (5) and the distance measuring device (4), and
- having a mirror and filter device (11) that is located on an optical axis (10) between the illumination device (6) and the operating point (9) and has at least one dichroic mirror (12) that transmits or reflects light beams as a function of wavelength and thereby splits light reflected by the operating point (9) between the distance measuring device (4) and the camera apparatus (5),
**characterized in that** the illumination device (6) has at least three punctiform light sources (13) that are arranged on an annular contour with reference to the optical axis (10) and are aligned at an angle (α) of < 15° to the optical axis (10).

2. Measuring apparatus according to Claim 1, **characterized in that** a positioning device (18) is provided with the aid of which the camera apparatus (5) and/or the distance measuring device (4) and/or the illumination device (6) can be adjusted relative to one another.

3. Measuring apparatus according to Claim 1 or 2, **characterized in that** the camera apparatus (5) and the distance measuring device (4) are arranged, with reference to the optical axis (10), parallel or orthogonal to one another in or on the measuring head (2).

4. Measuring apparatus according to one of Claims 1 to 3, **characterized**
- **in that** the illumination device (6) has at least a LED (13) and/or a halogen and/or a xenon light source and/or a stroboscope, and/or
- **in that** spectral main components of the illumination device (6) have a wavelength differing from that of the spectral main components of the distance measuring device (4), and/or
- **in that** the spectral main components of the illumination device (6) have a wavelength of 400-520 nm, and/or
- **in that** the illumination device (6) has a fiberoptics apparatus, and/or
- **in that** an optical device (14) is provided that focuses the light emitted by the illumination device (6) onto the operating point (9).

5. Measuring apparatus according to one of Claims 1 to 4, **characterized**
- **in that** the distance measuring device (4) is designed as an optical distance sensor, and/or
- **in that** the distance measuring device (4) operates with a conoscopic sensor and/or with a laser, and/or
- **in that** the laser operates with a defined wavelength, and/or
- **in that** the light emitted by the distance measuring device (4) has a wavelength differing from that of the light emitted by the illumination device (6), and/or
- **in that** a filter (17) for reducing undesired retroreflection of the distance measuring device (4) is arranged directly upstream of the camera apparatus (5), and/or
- **in that** a light beam of the illumination device (6) and a light beam of the distance measuring device (4) run virtually coaxially with one another.

6. Measuring apparatus according to one of Claims 1 to 5, **characterized**
- **in that** the measuring apparatus (1) is communicatively connected to a robot, a computer or a coordinate measuring machine, and/or
- **in that** the illumination device (6) and/or the distance measuring device (4) and/or the camera apparatus (5) are computer controlled.

7. Measuring apparatus according to one of Claims 1 to 6, **characterized**
- **in that** the camera apparatus (5) has a telecentric zoom objective, and/or
- **in that** the zoom objective has a drive unit,
- **in that** the camera apparatus (5) has a remote microscope attachment, and/or
- **in that** the camera apparatus (5) has a digital image memory, and/or
- **in that** the camera apparatus (5) operates with an imaging ratio between 1:5 and 5:1.

8. Measuring apparatus according to one of Claims 1 to 7, **characterized in that** an operating distance between the operating point (9) and the measuring apparatus (1) is greater than 70 mm.

## Revendications

1. Dispositif de mesure (1) pour la détection sans contact d'un écart entre une surface (7) d'un objet à mesurer (8) et le dispositif de mesure (1) ainsi que pour la détection visuelle sans contact simultanée de la surface (7),
- comprenant un dispositif de mesure d'écart (4), un dispositif à caméra (5) et une tête de mesure (2) comportant un dispositif d'éclairage (6),
- le dispositif d'éclairage (6) éclairant un point de travail (9) sur la surface (7) de l'objet à mesurer (8), sur lequel est en même temps effectuée la mise au point du dispositif à caméra (5) et du dispositif de mesure d'écart (4),
- comprenant un dispositif à miroir et de filtrage (11) disposé dans un axe optique (10) entre le dispositif d'éclairage (6) et le point de travail (9), lequel présente au moins un miroir dichroïque (12) qui laisse passer ou réfléchit les rayons lumineux en fonction de la longueur d'onde et distribue ainsi la lumière réfléchie par le point de travail (9) sur le dispositif de mesure d'écart (4) et le dispositif à caméra (5),
**caractérisé en ce**
**que** le dispositif d'éclairage (6) présente au moins trois sources de lumière ponctuelles (13) disposées sur un contour annulaire par rapport à l'axe optique (10), lesquelles sont orientées suivant un angle (α) < 15° par rapport à l'axe optique (10).

2. Dispositif de mesure selon la revendication 1, **caractérisé en ce qu'**il est prévu un dispositif de positionnement (18) avec lequel le dispositif à caméra (5) et/ou le dispositif de mesure d'écart (4) et/ou le dispositif d'éclairage (6) peuvent être ajustés l'un par rapport à l'autre.

3. Dispositif de mesure selon la revendication 1 ou 2, **caractérisé en ce que** le dispositif à caméra (5) et le dispositif de mesure d'écart (4) sont disposés parallèlement ou orthogonalement l'un à l'autre dans ou sur la tête de mesure (2) par rapport à l'axe optique (10).

4. Dispositif de mesure selon l'une des revendications 1 à 3, **caractérisé en ce**
- **que** le dispositif d'éclairage (6) présente au moins une LED (13) et/ou une source de lumière à l'halogène et/ou au xénon et/ou un stroboscope et/ou
- **que** les composantes spectrales principales du dispositif d'éclairage (6) présentent une longueur d'onde différente de la composante spectrale principale du dispositif de mesure d'écart (4) et/ou
- **que** les composantes spectrales principales du dispositif d'éclairage (6) présentent une longueur d'onde de 400 à 520 nm et/ou
- **que** le dispositif d'éclairage (6) présente un dispositif optique à fibres et/ou
- **qu'**il est prévu un dispositif optique (14) qui concentre au point de travail (9) la lumière émise par le dispositif d'éclairage (6).

5. Dispositif de mesure selon l'une des revendications 1 à 4, **caractérisé en ce**
- **que** le dispositif de mesure d'écart (4) est réalisé sous la forme d'un détecteur de distance optique et/ou
- **que** le dispositif de mesure d'écart (4) fonctionne avec un capteur conoscopique et/ou avec un laser et/ou
- **que** le laser fonctionne à une longueur d'onde définie et/ou
- **que** la lumière émise par le dispositif de mesure d'écart (4) présente une longueur d'onde différente de la lumière émise par le dispositif d'éclairage (6) et/ou
- **qu'**un filtre (17) destiné à réduire les réflexions indésirables du dispositif de mesure d'écart (4) est disposé directement devant le dispositif à caméra (5) et/ou
- **qu'**un rayon lumineux du dispositif d'éclairage (6) et un rayon lumineux du dispositif de mesure d'écart (4) se propagent de manière quasiment coaxiale l'un par rapport à l'autre.

6. Dispositif de mesure selon l'une des revendications 1 à 5, **caractérisé en ce**
- **que** le dispositif de mesure (1) est en liaison communicante avec un robot, un ordinateur ou un appareil de mesure de coordonnées et/ou
- **que** le dispositif d'éclairage (6) et/ou le dispositif de mesure d'écart (4) et/ou le dispositif à caméra (5) sont commandés par ordinateur.

7. Dispositif de mesure selon l'une des revendications 1 à 6, **caractérisé en ce**
- **que** le dispositif à caméra (5) présente un objectif de grossissement télécentrique et/ou
- **que** l'objectif de grossissement présente une unité d'entraînement
- **que** le dispositif à caméra (5) présente un embout de télémicroscope et/ou
- **que** le dispositif à caméra (5) présente une mémoire d'image numérique et/ou
- **que** le dispositif à caméra (5) fonctionne avec un rapport de représentation compris entre 1:5 et 5:1.

8. Dispositif de mesure selon l'une des revendications 1 à 7, **caractérisé en ce qu'**un écart de travail entre le point de travail (9) et le dispositif de mesure (1) est supérieur à 70 mm.
